# EUROPEAN PATENT SPECIFICATION

(11) **EP 1 327 494 B1**
(45) Date of publication and mention of the grant of the patent: **12.05.2010**
(21) Application number: 01963592.9
(22) Date of filing: 11.09.2001
(51) Int. Cl.: B23K 9/127, B23K 37/02

(54) **COPYING WELDING EQUIPMENT**
KOPIERSCHWEISSEINRICHTUNG
EQUIPEMENT DE SOUDAGE DE REPRODUCTION

(30) Priority: 16.10.2000 JP 2000315706; 02.05.2001 JP 2001135442
(43) Date of publication of application: 16.07.2003
(73) Proprietor: KABUSHIKI KAISHA KOKUHO, Yokosuka-city, Kanagawa-prefecture 239-0836 (JP); Kondo, Akihiro, Yokosuka-city, Kanagawa 239-0836 (JP)
(72) Inventor: KONDO, Akihiro, Yokosuka-city, Kanagawa 239-0836 (JP)
(74) Representative: Reinhard - Skuhra - Weise & Partner GbR
(86) International application number: PCT/JP2001/007886
(87) International publication number: WO 2002/032611

(56) References cited:
- EP-A- 0 876 871
- JP-A- 7 040 047
- JP-A- 7 040 047
- JP-A- 8 071 791
- JP-A- 8 071 791
- JP-A- 51 076 140
- JP-A- 59 110 498
- JP-A- 59 110 498
- JP-A- 62 124 074
- JP-A- 62 124 074
- US-A- 3 515 844
- US-A- 3 596 048

## Description

This invention relates to a tracking welder according to the preamble of claim 1 (see, for example, EP 0 876 871), in which a carriage is so structured as to travel along a predetermined welding line together with a welding torch mounted thereon.

### Background Art

When fillet welding of a corner of metallic plates is carried out by running the carriage mounted with the welding torch, the traveling direction of the carriage should be controlled so that the welding torch may travel along the welding line.

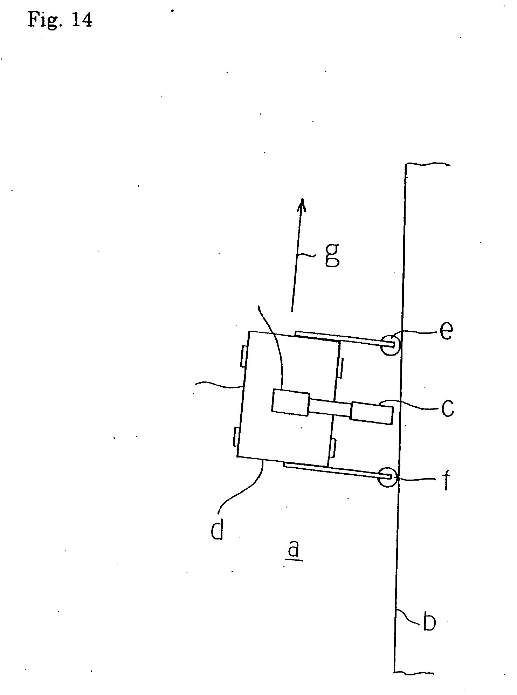

Figure 14 illustrates an example of the conventional tracking welders. In a case of fillet welding of the corner made by a virtually horizontally placed steel plate (a) and a steel web plate (b) erected on the steel (a), a self-travelable carriage (d) mounted with a welding torch (c) is placed on the steel plate (a), and the welding of the corner is automatically performed with the welding torch (c) at the same time of running the carriage (d) along a tracking face, that is the web plate (b).

The carriage (d) is mounted with a front tracking roller (e) projecting toward the tracking face (the web plate) (b) and a rear tracking roller (f) projecting at a long distance as compared with the front tracking roller E, and by running the carriage (d) in direction (g) slightly inclined toward the tracking face (the web plate) (b), the front tracking roller (e) and the rear tracking roller (f) become to be always contact with the tacking face (the web plate) (b), and thus a distance between the welding torch (c) and the corner is kept constant.

However, as for the above-mentioned conventional tracking welder, while it is possible to automatically weld the corner between the horizontally placed steel plate (a) and the web plate (b), there is a problem in that such the machine is not available in a case the web plate (b) does not exist (in a case of butt welding, for example).

Moreover, even when welding the corner by utilizing the erected wall b, there still remains a problem of limitation in the traveling directions of the carriage (d), and it is impossible to perform welding by running the carriage in the reverse direction from the arrow (g).

Furthermore, since the carriage (d) gradually approaches the web plate (b) while traveling, the wheels of the carriage (d) tend to be pushed back by the tracking rollers (e) and (f), and always slip in the lateral direction, thereby causing the strong frictional resistance and making the carriage (d) not to travel so smoothly. Further, since the two tracking rollers (e) and (f) press the web plate (b) while the carriage (d) is traveling, there is another problem of a danger in that the web pate (b) pushed by the rollers (e) and (f) might come off from the steel plate (a) in a case where the web plate (b) is temporally tacked on the steel plate (a), and it becomes subject to solve these problems.

European patent application EP 0876871 A1 discloses a welding vehicle including a frame to which four wheels, namely two non-steered rear wheels and two steerable front wheels are attached. The non-steerable rear wheels are driven by independent drive motors. The axle to which the steerable wheels are attached is not identical with the driven axle, or in other words, the steering axle does not coincide with the driven axle:

Also patent document JP H 7-40047 A, US patent 3,596,048 and JP S 62-124074 A disclose welding devices having four wheels disposed on two axles, wherein the steering axle does not coincide with the driven axle.

### Disclosure of the Invention

The present invention has been achieved in view of the aforementioned problems in the conventional arts, and it is an object to provide a tracking welder, which is widely applicable in the welding of various parts other than just a corner, which is able to perform welding even when the traveling direction of the carriage is reversed, and further, which can perform welding smoothly along the predetermined route without causing compulsive slipping to the wheels of the carriage while it is traveling.

The inventors found out that the above objects are attainable by setting a steering system to a carriage and controlling it, and thus have come to accomplish the present invention through their diligent scrutiny.

The tracking welder according to the present invention includes the features of claim 1.

The steering system may comprise a pair of arm bolts protruding from outer faces of the respective bearing units, a connection bar pivotally connected with one pair of arm bolts at both ends thereof, and a lever secured on an output shaft of the track-controlling motor and engaging with one of the arm bolts at a free end thereof.

The tracking welder may be further provided with a suction system for attracting the carriage toward a carriage-running face so as to enable the carriage to travel on the running face.

In the tracking welder of the present invention, the rotational motion of the driving source is transmitted to the wheels through the transmission system, thereby running the carriage. When the sensor mounted on the carriage detects displacement of the welding torch from the predetermined welding line, the tracking' controlling motor rotates in response of the detection signal from the sensor, and the bearing units turn in accordance with the rotational amount of the track-controlling motor through the steering system, whereby the direction of the wheels is corrected according to the turn of the bearing units, and the carriage comes to travel along the predetermined route, in such manner the welding is completed without deviating from the predetermined welding line.

Further, the outer cylinder supported by the carriage rotates by the rotation of the primary travel drive rotates, and the rotation of the outer cylinder is transmitted to the intermediate shaft by way of the transmission pin, whereby the rotation of the intermediate shaft is now transmitted to the wheels through the universal joints, and thus the carriage comes to travel smoothly.

Furthermore, when the sensor detects the displacement amount of the welding torch from the welding line while the carriage is traveling, the track-controlling motor rotates on basis of on the detection amount, the lever fixed on the output shaft of the track-controlling motor presses one of the arm bolts, thereby transmitting this force to another arm bolt through the connection bar, and in this way, both arm bolts come to turn in the same amount. Also, the bearing units coupled with the arm bolt turn together with the wheels, and the direction of the wheels is automatically corrected, whereby the carriage comes to travel along the predetermined route.

As already mentioned, in the case where transmission system of driving force is provided with the a hollow outer cylinder rotatably supported on the carrier to be transmitted with the rotational motion of the driving source, the intermediate shaft disposed in the hollow of the outer cylinder and connected with the axles of the wheels through the universal joints at both ends thereof, the direction of the wheels can be changed without being impeded by the intermediate shaft because the universal joints are provided between the intermediate shaft and respective wheels, and the intermediate shaft is disposed so as to be possible to swing around the transmission pin serving as a fulcrum.

Further, if the tracking welder is further provided with the suction system for attracting the carriage toward the carriage-running face so as to enable the carriage to travel on the running face, it is possible to hold the carriage on the carriage-running face, thereby enabling the welder to perform butt welding of works made of non-magnetic metal and multi-layer welding at a corner of works, for example, and application fields of this tracking welder come to be increased.

Furthermore, in the tracking welder of this invention, which is most suitable for butt welding of non-magnetic metal works, the base may be adsorbed on the works by sucking air in the suction cup using the suction source of the suction system, thereby completing setting for the works, on the other hand, the adsorption state of the base on the works is released by stopping the operation of the suction source of the suction system and introducing air into the suction cup, whereby the base becomes removable. In this manner, arrangements and withdrawals as a whole become easier and possible to be completed in a short time. In a preferred embodiment of the tracking welder in the present invention, the setting of the route for the carriage becomes available simple.

### Brief Description oft he Drawings

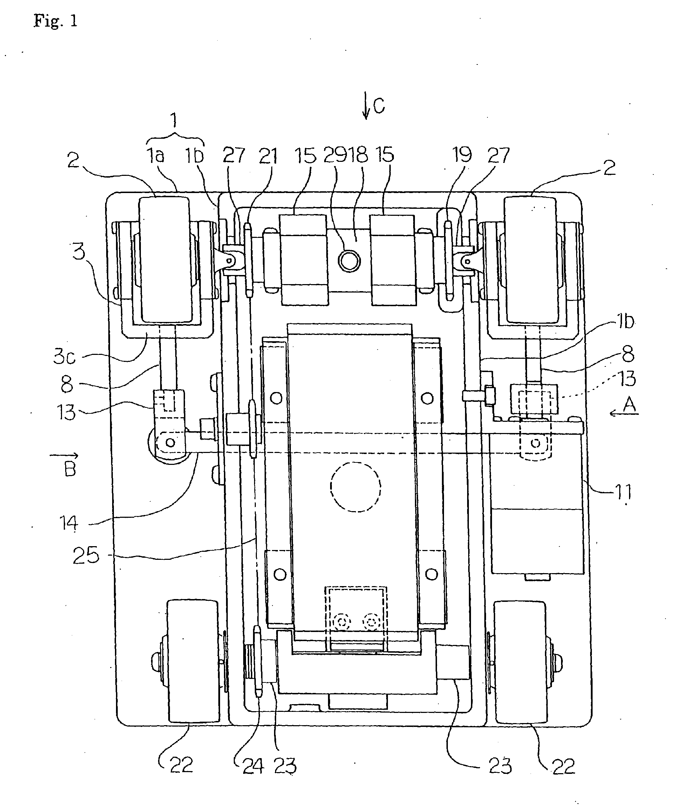

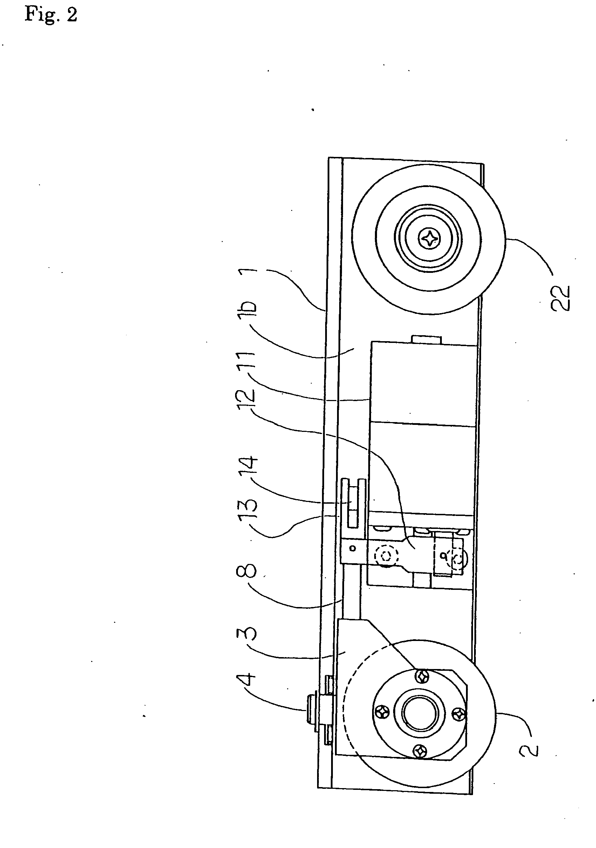

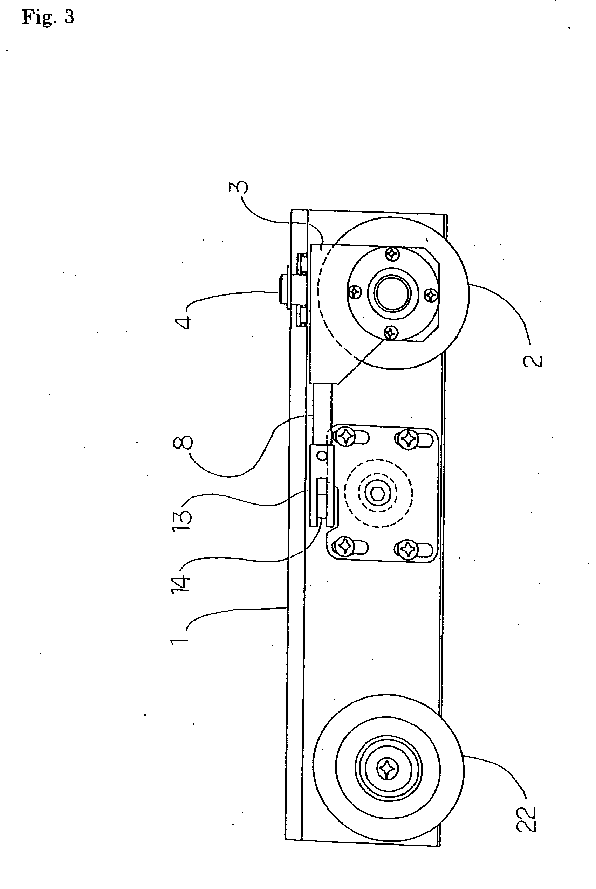

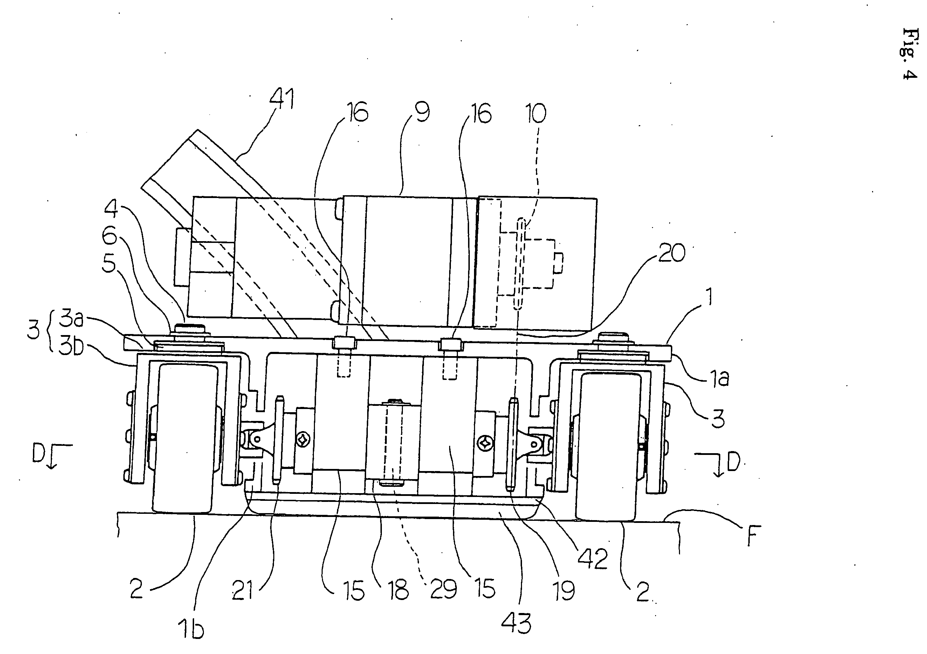

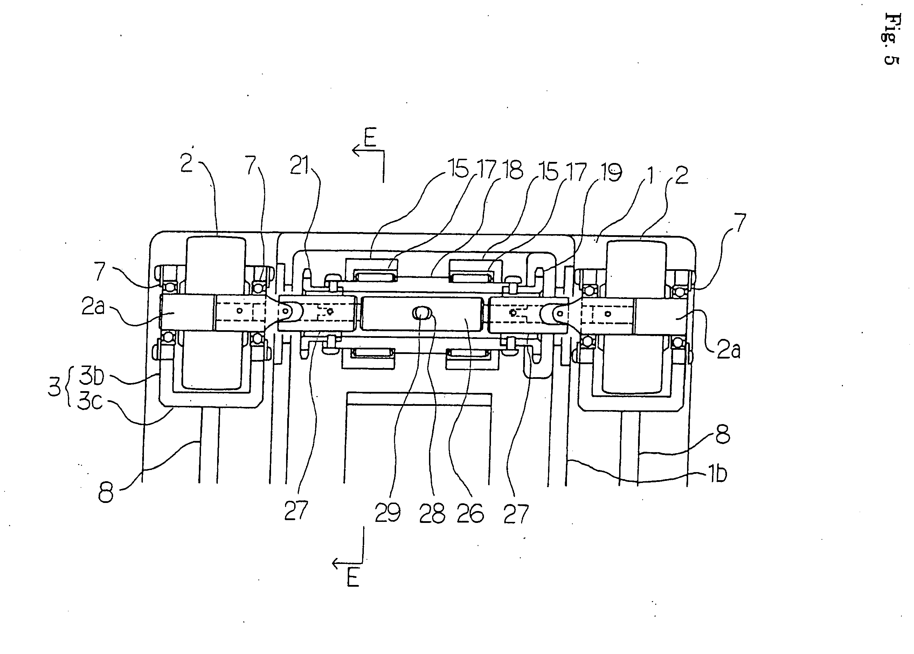

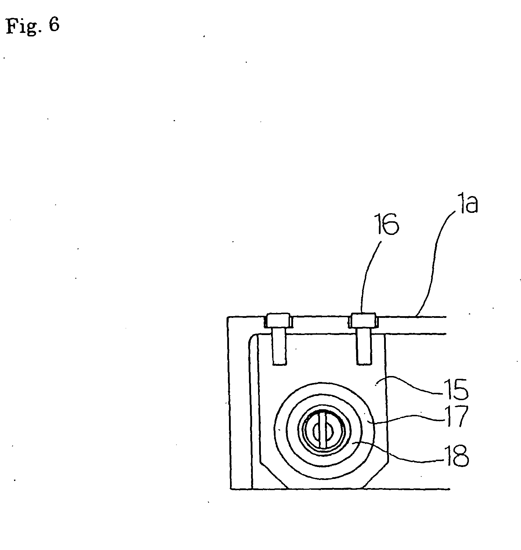

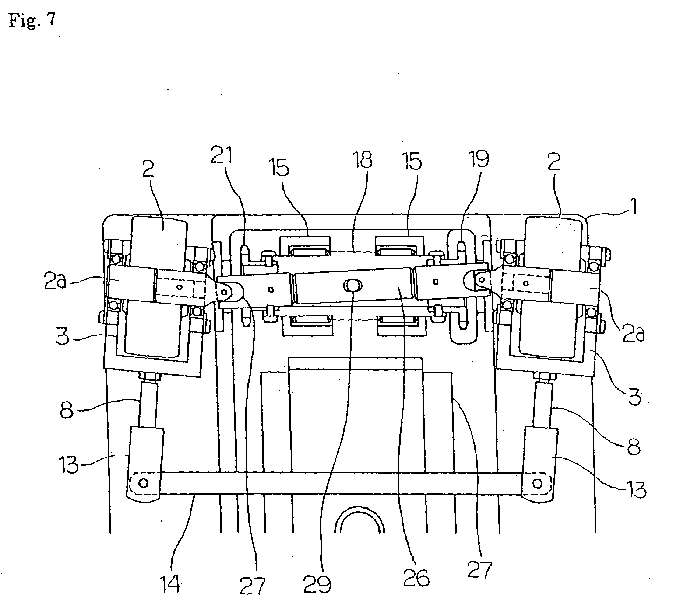

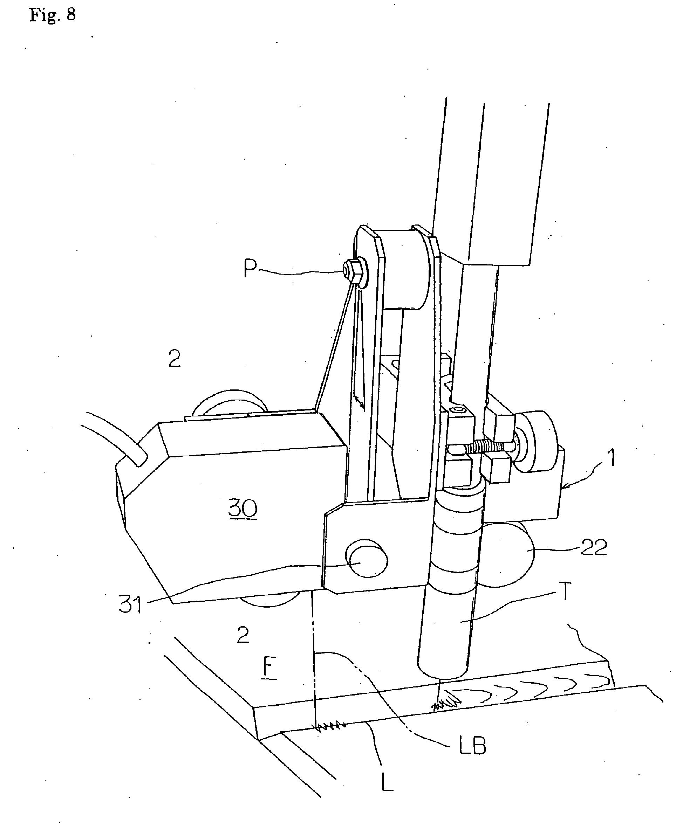

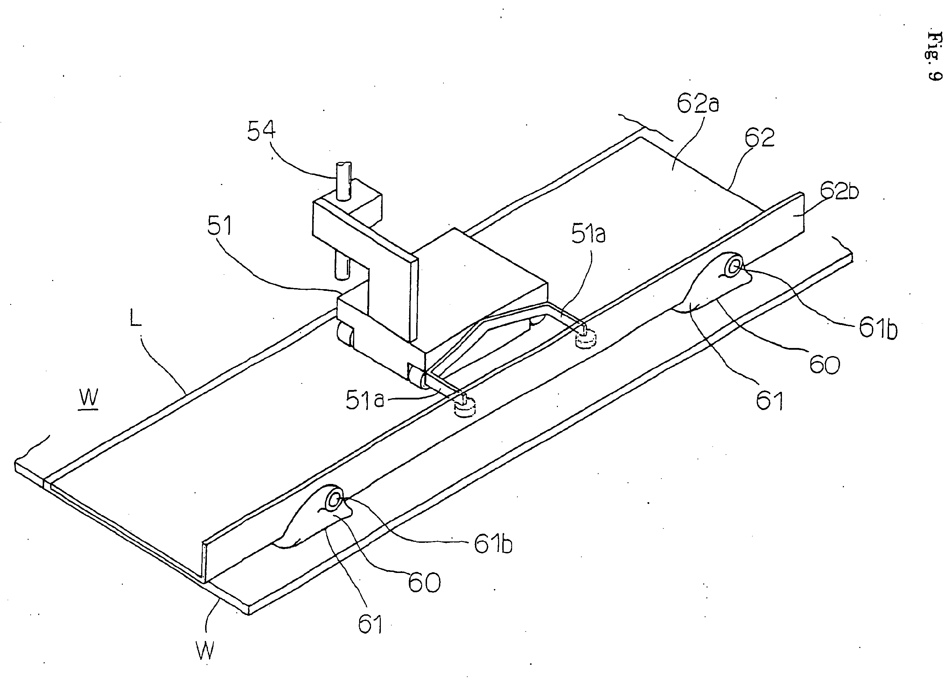

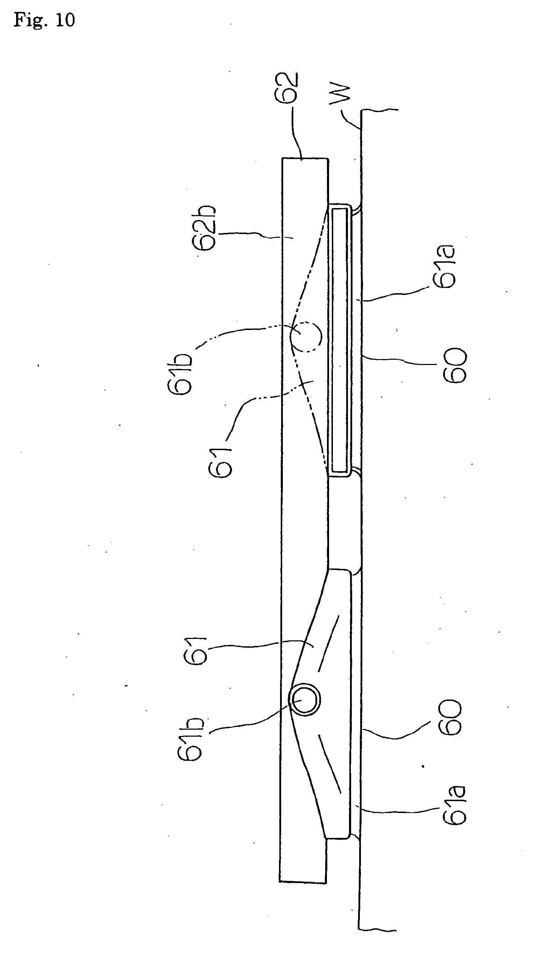

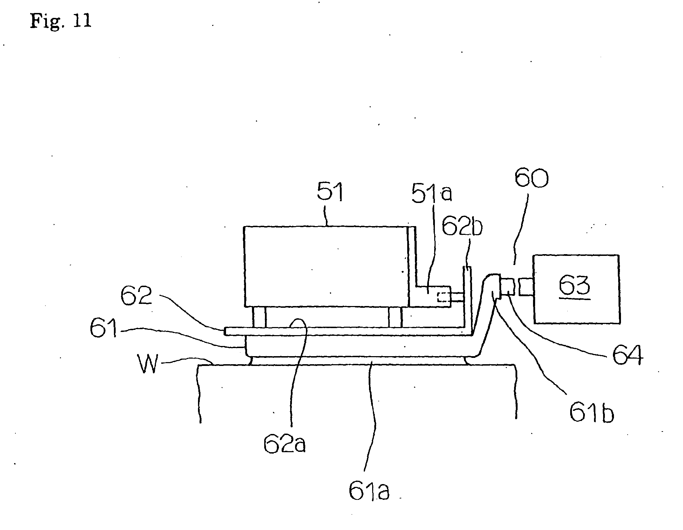

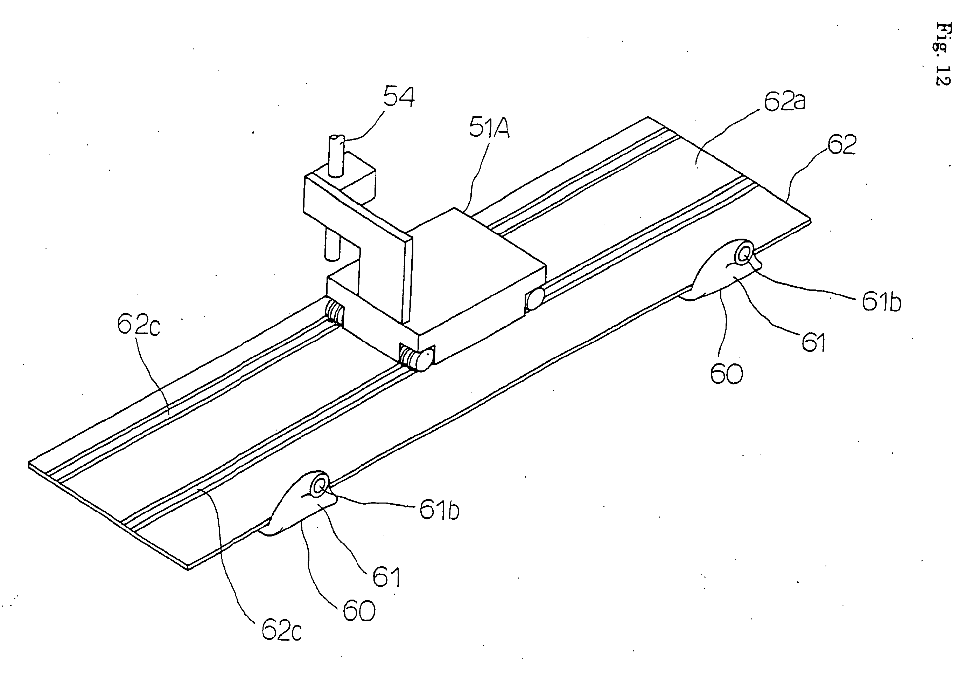

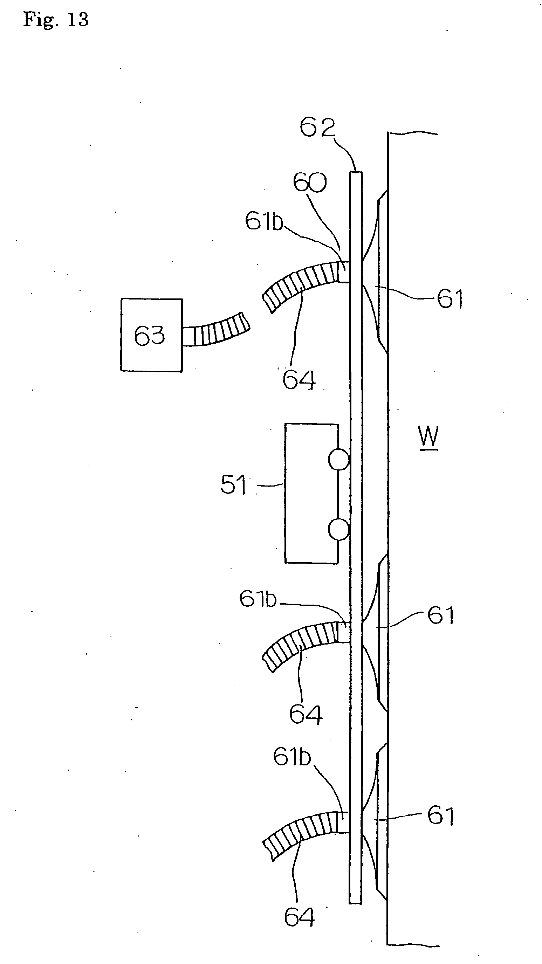

Fig. 1 is a bottom view illustrating an embodiment of the tracking welder according to this invention; Fig. 2 is an explanatory view from the direction of arrow A in Fig. 1; Fig. 3 is an explanatory view from the direction of arrow B in Fig. 1; Fig. 4 is an explanatory view from the direction of arrow C in Fig. L Fig. 5 is a sectional view along section lines D-D of Fig. 4; Fig. 6 is a sectional view along section lines E-E of Fig. 5; Fig. 7 is an explanatory view illustrating the action of the steering system, Fig. 8 is an explanatory view illustrating a state of butt welding using the tracking welder according to the embodiment of this invention; Fig. 9 is a perspective view illustrating a tracking welder not covered by the present invention; Fig. 10 is a side view of the tracking welder shown in Fig. 9; Fig. 11 is a front view of the tracking welder shown in Fig. 9; Fig. 12 is a perspective view illustrating other examples of the tracking welder not covered by the present invention; Fig. 13 is a side view illustrating other example of the tracking welder not covered by the present invention; and Fig. 14 is a top view illustrating the action of the conventional tracking welder.

### Best Mode for Carrying Out the Invention

The present invention will be described in detail on basis of embodiment and examples not falling under the scope of the present invention thereinafter, however this invention is not limited to these embodiments.

### (Embodiment of the present invention 1)

The embodiment of the tracking welder according to this invention is shown in Fig. 1 to Fig. 8.

A carriage 1 is composed of a rectangular base plate 1a and rectangular frame 1b disposed in the center on the bottom face of the base plate 1a as shown in Fig. 1 and Fig. 4, and a pair of wheels 2, which functions as front wheels on left and right side, is supported by bearing units 3, respectively.

The bearing unit 3 is provided with sidewalls 3b extending downward from the respective ends of an upper plate 3a, and a back wall 3c extending downward from the back end of the upper plate 3a. A thrust pin 4 protruding from the upper face of the upper plate 3a is inserted into a bearing 5, which is fitted into a through hole formed in the carriage 1, and the end of the thrust pin 4 projecting out from the through hole is locked by a stopper ring 6.

As shown in Fig. 5, bearings 7 are fitted into holes formed through the both sidewalls 3b of the bearing unit 3, and an axle 2a of the wheel 2 is supported by these bearings 7. Accordingly, the wheels 2 are structured to rotate around the axles 2a, and so designed as to be able to change the running direction around the thrust pins 4.

The bearing unit 3 is provided with an arm bolt 8 on the back wall 3c thereof. Further, a motor 9 is mounted on the upper face of the carriage 1 as a driving source, as shown in Fig. 4, and attached with a sprocket 10 on an output shaft thereof.

As also shown in Fig. 8, carriage 1 is mounted with a welding torch T and a sensor 30 for detecting displacement by applying a laser beam to the welding line L, and a track-controlling motor 11 is attached on the outer wall of the frame 1b, which rotates by receiving a detection signal from the sensor 30 as shown in Fig. 2. The motor 11 fixed with a lever 12 on the output shaft thereof.

An optical axis LB of the sensor 30 is focused to the welding line L through a turning operation of a knob 31, and the welding torch T is so structured as to weave within a range shown by arrows around an axis P.

As also shown in Fig. 3, the free end of the lever 12 is engaged with the arm bolts 8 protruding from one of the bearing units 3, and the two arm bolts 8 are pivotally connected to respective ends of a connection bar 14 through forked fittings 13 secured on the free ends of the arm bolts 8.

Namely, the track-controlling motor 11 works on basis of the signal from the sensor 30, thereby swinging the lever 12 in the normal or the reverse directions, and the swing of the lever 12 is transmitted to the bearing units 3 of the left and right sides through the arm bolts 8, thereby changing the direction of the left and right side wheels 2 together with the bearing units 3 toward the left or right side from the traveling direction of the carriage 1. In this manner, the steering system is composed.

As also shown in Fig. 6, a pair (left and right) of cylinder brackets 15 are fixed on the bottom face of the base plate 1a of the carriage 1 with bolts 16, a hollow outer cylinder 18 is rotatably supported by bearings 17 fitted into through holes of the cylinder brackets 15, and a sprocket 19 disposed at one end of the outer cylinder 18 is connected with a sprocket 10 disposed to the output shaft of the motor 9 through a chain 20.

A chain 25 is stretched between a sprocket 21 disposed at another end of the outer cylinder 18 and a sprocket 24 disposed to an axle 23 of rear wheels 22. As shown in Fig. 5, the intermediate shaft 26 disposed in the hollow of the outer cylinder 18 is connected to the axles 2a of the front wheels 2 through universal joints 27 at the respective ends thereof, and a transmission pin 29 is passed through an oval hole 28 formed in the middle of the intermediate shaft 26 and engaged to the hollow outer cylinder 18 at the both ends thereof.

That is to say, when the motor 9 starts, the rotational motion of the motor 9 is transmitted to the outer cylinder 18 through the sprocket 10, the chain 20, and the sprocket 19, the rotational motion of the outer cylinder 18 is transmitted to the intermediate shaft 26 through the transmission pin 29, whereby the front wheels 2 come to rotate and at the same time, the rear wheels 22 also come to rotate by the power transmitted to the rear axle 23 through the sprocket 21, the chain 25, and the sprocket 24, and in this way, the transmission system for driving force is composed.

In this time, the universal joint 27 is disposed between the axle 2a of the wheel 2 and the intermediate shaft 26 transmitting the power, and the universal joint 27 is fitted to the intermediate shaft 26 with a play, therefore the power of the intermediate shaft 26 is transmitted to the wheels 2 smoothly even when correcting the direction of the wheels 2 while traveling.

Furthermore, this tracking welder is provided with a suction system 40 for attracting the carriage 1 on a carriage-running face F so as to enable the carriage 1 to travel, as shown in Fig. 4.

The suction system 40 is provided with a suction sleeve 41 disposed to the carriage 1 to communicate with the inside of the flame 1b, packing 43 made of silicon rubber or so, attached on the lower end of the frame 1b through a bottom plate 42 and set in near contact with the carriage-running face F, and a vacuum pump (not shown) working as a suction source and connected with the suction sleeve 41 through a hose. The suction system 40 is designed to attract the carriage 1 so that the carriage 1 may travel on the carriage-running face F by actuating the vacuum pump and sucking air in the frame 1b of the carriage 1.

Next, an explanation will be given as to an operation for performing welding along the predetermined welding line by using the aforementioned the tracking welder.

As shown in Fig. 8, in a case of carrying out butt welding of steel plates, at first, the tracking welder is placed on the running face F of the steel plates in a state of directing the front wkeels2 toward the welding direction (on the left side in Fig. 8). Then, the optical axis LB of the sensor 30 is adjusted with the welding line L by the turning operation of the knob 31, and the welding torch T is approached to the starting point of the welding.

Following suction of air in the inner part of the frame 1b of the carriage 1 to enable the carriage 1 to travel in a state of being attracted on the carriage running face F by actuating the vacuum pump, a switch on a cover (not shown) provided on the carriage 1 is operated on to supply power to the motor 9. In this manner, the carriage 1 of the tracking welder comes to travel over the welding of the predetermined welding line L by rotating the wheels 2 at the same time of making the welding torch T to weave in the range of arrows around the axis P.

Then, when the sensor 30 on the carriage 1 detects deviation (displacement) of the present traveling route of the carriage 1 from the predetermined welding line L, the track-controlling motor 11 rotates as much as an amount corresponding to the displacement amount in response to the detection signal from the sensor 30, the lever 12 fixed to the track-controlling motor 11 presses the arm bolt 8 by the rotation of the motor 11, whereby the direction of the wheels 2 is correct according to the turn of the bearing units 3 pushed by the arm bolts 8, and thus carriage 1 of the tracking welder comes to travel always without deviating from the predetermined welding line L.

Under this operation, as illustrated in Fig. 7, since the universal joint 27 is disposed between the axle 2a of the wheel 2 and the intermediate shaft 26 transmitting the power, and the universal joint 27 is fitted with the intermediate shaft 26 with the play, the intermediate shaft 26 just inclines slightly when the direction of the wheels 2 is corrected during the travel, so that it is possible to smoothly transmit the power to the wheels 2.

In addition to above, the tracking welder having the aforementioned construction may be also mounted with an equalizer system.

### (Example 1)

An Example of the tracking welder not falling under the scope of the present invention is shown in Fig. 9 to Fig. 11.

The tracking welder shown in Fig. 9 is a welding apparatus for using butt welding of works W made of non-magnetic metal, such as aluminum and stainless steel. A suction system 60 in this tracking welder, which attracts a carriage 51 mounted with a welding torch 54 toward the works W so as to enable the carriage 51 to travel, is mainly composed of a flat base 62 made of magnetic metal and provided with a carriage-running face 62a and a tracking wall 62b as a traveling route-setting means, a flexible suction cup 61 fitted on the reverse side (lower side in the figures) of the carriage-running face 62a of the base 62 in a state of directing an aperture 61a toward the opposite direction of the carriage-running face 62a, a suction pump (suction source) 63 connected with a suction port 61b of suction cup 61 through a hose 64 to such the air in the suction cup 61, and a magnet (not shown) disposed on the carriage 51 for preventing the carriage 51 from falling as shown in Fig. 10 and Fig. 11.

The suction system 60 is so designed as to enable the base 62 to be attached not only on the upper face of the works W, but also on the side face and the bottom face of the works W by actuating the suction pump 63 and sucking air in the suction cup 61, and the other hand, as to enable the base 62 to be easily detached from the works W by stopping the operation of the suction pump 63 and opening the inside of the suction cup 61 into the atmosphere.

In this case, the carriage 51 is installed with a pair of the tracking arms 51a on the side face thereof, and so structured as to travel along the predetermined running route by setting the carriage 51 to slide-contact the tracking arms 51a with the tracking wall 62b of the base 62 in a state of attaching the base 62 to the works W so that the tracking wall 2b positioned at the side edge of the base 62 may be situated along the butt welding line L of the works W.

In this tracking welder, the flat base 62 made of magnetic metal and possible to set the traveling route of the carriage 51 is adsorbed on the works W, and the setting of the base 62 against the works W is completed by actuating the suction pump 63 of the suction system 60 and sucking air in the suction cup 61 after placing the base 62 on the works W so as to situate the tracking wall 62b along the butt welding line L of the works W. On the other hand, the adsorption state of the base 62 on the works W is cancelled and the withdrawal of the base 62 becomes possible by stopping the operation of the suction pump 63 of the suction system 60, and the respective operation in arrangements and withdrawals is completed easily in a short time, accordingly workability of the butt welding comes to be improved remarkably.

Further in this welder, the traveling route of the carriage 51 is made by the tracking wall 62b of the base 62, therefore the setting of the traveling route of the carriage 51 is done with the simple construction.

### (Example 2)

The other example of the tracking welder not falling under the scope of the present invention is shown in Fig. 12. There are differences between this welder and the welder according to the preceding example (Example 1) in the point that the base 62 is formed with rails 62c as a traveling route-setting means so as to run a carriage 51A along the predetermined traveling route by these rails 62c as shown in Fig. 12, and the tracking welder according to this embodiment is the same as the welder according to the preceding embodiment excepting the construction as mentioned above.

Therefore, also in this welder, the respective operation in arrangements and withdrawals is completed easily in a short time, accordingly workability of the butt welding comes to be improved remarkably, additionally the setting of the traveling route of the carriage 51A is done with the further simple construction since the traveling route of the carriage 51 can be set by the rails 62c formed on the base 62.

### (Example 3)

Fig. 13 illustrates the other example of the tracking welder not falling under the scope of the present invention. There are differences between this welder and the welders according to the preceding examples (Example 1 and 2) in the point that the suction port 61b of the suction cup 61 in the suction system 60 is disposed on the carriage-running face 62a of the base 62 in a position where the carriage 51 may travel without hindrance and the suction port 61b and the suction pump 63 are connected through the hose as shown in Fig. 13, and the tracking welder according to this embodiment is the same as the welders according to the preceding embodiments excepting the construction as mentioned above.

Also in this welder, the respective operation in arrangements and withdrawals is completed easily in a short time.

In the aforementioned examples shown in Fig. 9 to Fig. 12, the cases are illustrated where the tracking welder is set on the upper surface of the work W, however the present invention is not limited merely to such the examples and it is also set the welder on the side face as shown in Fig. 13 (Example 3), or on the bottom face of the work W

### Industrial Applicability

As described above, in the tracking welder according to the present invention, providing the aforementioned construction, an excellent effect can be obtained in that it is possible to carry out various kinds of automatic welding, including butt welding of steel plates with each other, without being limited only in fillet welding between the steel plate and the web plate erected on this steel plate unlike the conventional tracking welder.

Also, in a preferred embodiment of the tracking welder according to the present invention, providing the aforementioned construction, the traveling direction is not limited in just one direction, but it is possible to apply welding from the reverse direction. In another preferred embodiment of the tracking welder according to the present invention, having the aforementioned construction, it is possible to smoothly perform welding along the predetermined route without causing unnatural slipping to the wheels while the carriage is traveling.

## Claims

1. A tracking welder for automatically welding works along a predetermined welding line, comprising:
a carriage (1) provided with left and right side wheels (2) rotatably supported respectively through a pair of bearing units (3) pivotally mounted thereon;
a driving source (9) mounted on the carriage (1) for driving said carriage (1);
a welding torch (T) mounted on the carriage (1);
a sensor (30) mounted on the carriage (1) for detecting the welding line;
a track-controlling motor (11) mounted on the carriage (1) and rotating in forward and backward directions in response to a detection signal from said sensor (30); and
a steering system (8, 12, 14) mounted on the carriage (1) for turning said bearing units (3) as much as an amount corresponding to a rotational amount of said track-controlling motor (11)
**characterized in that**:
the tracking welder further comprises a transmission system mounted to the carriage (1) for transmitting a rotational motion of said driving source (9) to said left and right side wheels (2), said transmission system being provided with:
a hollow outer cylinder (18) rotatably supported on said carriage (1) and transmitting the rotational motion of the driving source (9);
an intermediate shaft (26) disposed in the hollow of said outer cylinder (18) and connected with axles (2a) of said wheels (2) through universal joints (27) at both ends thereof; and
a transmission pin (29) passing through an oval hole formed in said intermediate shaft (26) and engaged to said outer cylinder (18) at both ends thereof.

2. A tracking welder as set forth in claim 1, wherein said steering system (8, 12, 14) is provided with:
a pair of arm bolts (8) protruding from outer faces of said respective bearing units (3);
a connection bar (14) pivotally connected with said one pair of arm bolts (8) at both ends thereof; and
a lever (12) secured on an output shaft of said track-controlling motor (11) and engaging with one of said arm bolts (8) at a free end thereof.

3. A tracking welder as set forth in claim 1 or 2, wherein said welder is further provided with a suction system (40) for attracting the carriage(1) toward a carriage-running face so as to enable the carriage (1) to travel on the running face.

## Patentansprüche

1. Spurfiihrungsschweißgerät zum automatischen Schweißen von Werkstücken entlang einer vorbestimmten Schweißbahn, das folgendes umfasst:
einen Wagen (1), der mit linken und rechten seitlichen Rädern (2) versehen ist, die jeweils durch ein Paar von schwenkbar an ihm befestigten Lagereinheiten (3) drehbar gelagert sind, eine an dem Wagen (1) befestigte Antriebsquelle (9) zum Antreiben des Wagens (1),
einen Schweißbrenner (T), der an dem Wagen (1) befestigt ist,
einen an dem Wagen (1) befestigten Fühler (30) zum Ermitteln der Schweißbahn,
einen Bahnsteuerungsmotor (11), der an dem Wagen (1) befestigt ist, und ansprechend auf ein Ermittlungssignal von dem Fühler (30) in Vorwärts- und Rückwärtsrichtung drehbar ist, und
ein Lenksystem (8, 12, 14), das auf dem Wagen (1) befestigt ist, um die Lagereinheiten (3) um soviel zu schwenken, wie es einem Betrag einer Drehung des Bahnsteuerungsmotors (11) entspricht,
**dadurch gekennzeichnet, dass**
das Spurfiihrungsschweißgerät ferner ein an dem Wagen (1) befestigtes Übertragungssystem zum Übertragen einer Drehbewegung der Antriebsquelle (9) auf die linken und rechten seitlichen Räder (2) umfasst, wobei das Übertragungssystem ausgestattet ist mit:
einem hohlen äußeren Zylinder (18), der drehbar auf dem Wagen (1) gelagert ist und die Drehbewegung der Antriebsquelle (9) überträgt,
einer Zwischenwelle (26), die in dem Hohlraum des äußeren Zylinders (18) angeordnet und an ihren beiden Enden durch Kardangelenke (27) mit Achsen (2a) der Räder (2) verbunden ist, und
einem Übertragungsstift (29), der durch eine in der Zwischenwelle (26) ausgebildete ovale Bohrung hindurchgeht und an seinen beiden Enden mit dem äußeren Zylinders (18) in Eingriff steht.

2. Spurführungsschweißgerät nach Anspruch 1, wobei das Lenksystem (8, 12, 14) folgendes aufweist:
ein Paar von Hebelbolzen (8), die von äußeren Flächen der jeweiligen Lagereinheiten (3) vorstehen,
eine Verbindungsstange (14), die an ihren beiden Enden schwenkbar mit dem einen Paar von Hebelbolzen (8) verbunden ist, und
einen Hebel (12), der an einer Arbeitswelle des Bahnsteuerungsmotors (11) befestigt ist und an seinem freien Ende mit einem der Hebelbolzen (8) in Eingriff steht.

3. Spurführungsschweißgerät nach Anspruch 1 oder 2, wobei das Schweißgerät ferner mit einem Saugsystem (40) zum Heranziehen des Wagens (1) in Richtung einer Wagenlauffläche ausgerüstet ist, so dass der Wagen (1) die Lauffläche befahren kann.

## Revendications

1. Chariot de soudage destiné à des travaux de soudage automatique le long d'une ligne de soudure, comprenant :
- un chariot (1) muni de roues latérales gauche et droite (2) supportées respectivement de manière rotative par une paire d'unités de support (3) montées pivotantes sur ce chariot ;
- une source motrice (9) montée sur le chariot (1) destinée à entraîner ledit chariot (1);
- un chalumeau soudeur (T) monté sur le chariot (1) ;
- un capteur (30) monté sur le chariot (1) destiné à détecter la ligne de soudure ;
- un moteur à commande de trajectoire (11) monté sur le chariot (1) et tournant vers l'avant et l'arrière en réponse à un signal de détection émanant dudit capteur (30) ; et
- un système de direction (8, 12, 14) monté sur le chariot (1) destiné à tourner lesdites unités de support (3) d'une valeur rotationnelle correspondant audit moteur à commande de trajectoire (11), **caractérisé par le fait que** le chariot de soudage comprend en outre un système de transmission monté sur le chariot (1) destiné à transmettre un mouvement rotationnel de ladite source motrice (9) auxdites roues droite et gauche (2), ledit système de transmission étant muni de :
- un cylindre extérieur creux (18) supporté rotativement sur ledit chariot (1) et transmettant le mouvement de rotation de la source motrice (9) ;
- un arbre intermédiaire (26) disposé dans le creux dudit cylindre extérieur (18) et relié aux axes (2a) desdites roues (2) par l'intermédiaire de joints universels (27) aux deux extrémités dudit arbre ; et
- une broche de transmission (29) traversant un trou ovale formé dans ledit arbre intermédiaire (26) et en prise avec ledit cylindre extérieur (18) aux deux extrémités dudit cylindre.

2. Chariot de soudage selon la revendication 1, dans lequel ledit système de direction (8, 12, 14) est muni de :
- une paire d'écrous de rotule (8) dépassant des faces extérieures desdites unités de support respectives (3) ;
- une barre de connexion (14) reliée pivotante à ladite paire d'écrous de rotule (8) aux deux extrémités de ladite barre ; et
- un levier (12) fixé sur un arbre de sortie dudit moteur à commande de trajectoire (11) et venant en prise avec un desdits écrou de rotule (8) à une extrémité libre dudit levier.

3. Chariot de soudage selon la revendication 1 ou 2, dans lequel ladite machine de soudage est en outre munie d'un système d'aspiration (40) destiné à attirer le chariot (1) vers une face de roulement du chariot de manière à permettre au chariot (1) de se déplacer sur la face de roulement.
